(19) Europäisches Patentamt / European Patent Office / Office européen des brevets

(11) **EP 3 706 214 A1**

(12) **EUROPEAN PATENT APPLICATION**
published in accordance with Art. 153(4) EPC

(43) Date of publication:
**09.09.2020 Bulletin 2020/37**

(51) Int Cl.:
**H01M 4/525** (2010.01)   **C01G 53/00** (2006.01)
**H01M 4/505** (2010.01)

(21) Application number: **18873337.2**

(22) Date of filing: **29.10.2018**

(86) International application number:
**PCT/JP2018/040152**

(87) International publication number:
**WO 2019/088032 (09.05.2019 Gazette 2019/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.10.2017   JP 2017209541**

(71) Applicants:
• **Sumitomo Chemical Company, Limited**
**Tokyo 104-8260 (JP)**

• **Tanaka Chemical Corporation**
**Fukui-shi, Fukui 910-3131 (JP)**

(72) Inventors:
• **KAGEURA Jun-ichi**
**Niihama-shi**
**Ehime 792-8521 (JP)**
• **MATSUMOTO Kayo**
**Fukui-shi**
**Fukui 910-3131 (JP)**

(74) Representative: **Vossius & Partner**
**Patentanwälte Rechtsanwälte mbB**
**Siebertstrasse 3**
**81675 München (DE)**

(54) **LITHIUM COMPOSITE METAL COMPOUND, POSITIVE ELECTRODE ACTIVE MATERIAL FOR LITHIUM SECONDARY BATTERIES, POSITIVE ELECTRODE FOR LITHIUM SECONDARY BATTERIES, AND LITHIUM SECONDARY BATTERY**

(57)     A lithium composite metal compound is a lithium composite metal compound represented by Composition Formula (I), in which in a powder X-ray diffraction measurement using CuKa radiation, when a crystallite diameter representing a diffraction peak in a range of $2\theta = 18.7 \pm 1$Å is defined as $L_a$ and a crystallite diameter representing a diffraction peak in a range of $2\theta = 64.5 \pm 1$Å is defined as $L_b$, a ratio (La/Lb) of $L_a$ to $L_b$ is $L_a/L_b \leq 1.3$.

**Description**

[Technical Field]

The present invention relates to a lithium composite metal compound, a positive electrode active material for lithium secondary batteries, a positive electrode for lithium secondary batteries, and a lithium secondary battery.
Priority is claimed on Japanese Patent Application No. 2017-209541, filed on October 30, 2017, the content of which is incorporated herein by reference.

[Background Art]

A lithium composite metal compound has been used as a positive electrode active material for lithium secondary batteries. Lithium secondary batteries have been already in practical use not only for small power sources in mobile phone applications, notebook personal computer applications, and the like but also for medium-sized and large-sized power sources in automotive applications, power storage applications, and the like.
The crystal structure of the lithium composite metal compound is involved in the removal of lithium from the positive electrode during charging and the insertion of lithium during discharging.
For this reason, there have been attempts to control the crystal structure of the lithium composite metal compound for the purpose of improving the battery characteristics of a lithium secondary battery using the lithium composite metal compound.
For example, Patent Literature 1 describes a lithium composite metal compound powder having a configuration in which the ratio of the crystallite size of a (003) plane to the crystallite size of a (110) plane of a lithium composite metal compound is 1.0 or more and less than 2.5 in order to improve the life-time characteristics and initial charge efficiency, and to reduce initial resistance of lithium secondary batteries.

[Citation List]

[Patent Literature]

[Patent Literature 1]
PCT International Publication No. WO2014/136760

[Summary of Invention]

[Technical Problem]

There is still room for improvement in a lithium composite metal compound in order to further improve battery characteristics such as a cycle retention ratio.
The present invention has been made in view of the above circumstances, and an object thereof is to provide a lithium composite metal compound having a high cycle retention ratio under a high voltage with an upper limit voltage of 4.45 V, a positive electrode active material for lithium secondary batteries using the lithium composite metal compound, a positive electrode for lithium secondary batteries, and a lithium secondary battery.

[Solution to Problem]

That is, the present invention includes the inventions of the following [1] to [8].

[1] A lithium composite metal compound represented by Composition Formula (I), in which, in a powder X-ray diffraction measurement using CuKa radiation, when a crystallite diameter calculated from a diffraction peak in a range of $2\theta = 18.7 \pm 1°$ is defined as La and a crystallite diameter calculated from a diffraction peak in a range of $2\theta = 64.5 \pm 1°$ is defined as $L_b$, a ratio ($L_a/L_b$) of $L_a$ to $L_b$ is $L_a/L_b \leq 1.3$,

$$Li[Li_x(Ni_{(1-y-z)}Co_yM_z)_{1-x}]O_2 \qquad (I)$$

in Formula (I), M is one or more metal elements selected from the group consisting of Mn, Fe, Cu, Ti, Mg, Al, W, B, Mo, Zn, Sn, Zr, Ga, Nb, and V, and $-0.1 \leq x \leq 0.2$, $0 < y \leq 0.3$, and $0 \leq z \leq 0.2$ are satisfied.
[2] The lithium composite metal compound according to [1], in which Lb satisfies $600 Å \leq L_b \leq 800 Å$.
[3] The lithium composite metal compound according to [1] or [2], in which a BET specific surface area is more than 0.4 m²/g and 3.0 m²/g or less.

[4] The lithium composite metal compound according to any one of [1] to [3], in which an amount of lithium hydroxide obtained by subjecting the lithium composite metal compound to neutralization titration is 0.3 mass% or less with respect to a total mass of the lithium composite metal compound.

[5] The lithium composite metal compound according to any one of [1] to [4], in which $0 < x \leq 0.2$ is satisfied in Composition Formula (I).

[6] A positive electrode active material for a lithium secondary battery, including: the lithium composite metal compound according to any one of [1] to [5].

[7] A positive electrode for a lithium secondary battery, including: the positive electrode active material for a lithium secondary battery according to [6].

[8] A lithium secondary battery, including: the positive electrode for a lithium secondary battery according to [7].

[Advantageous Effects of Invention]

According to the present invention, it is possible to provide a lithium composite metal compound having a high cycle retention ratio when charging and discharging are performed under a high voltage with an upper limit voltage of 4.45 V, a positive electrode active material for lithium secondary batteries using the lithium composite metal compound, a positive electrode for lithium secondary batteries, and a lithium secondary battery.

[Brief Description of Drawings]

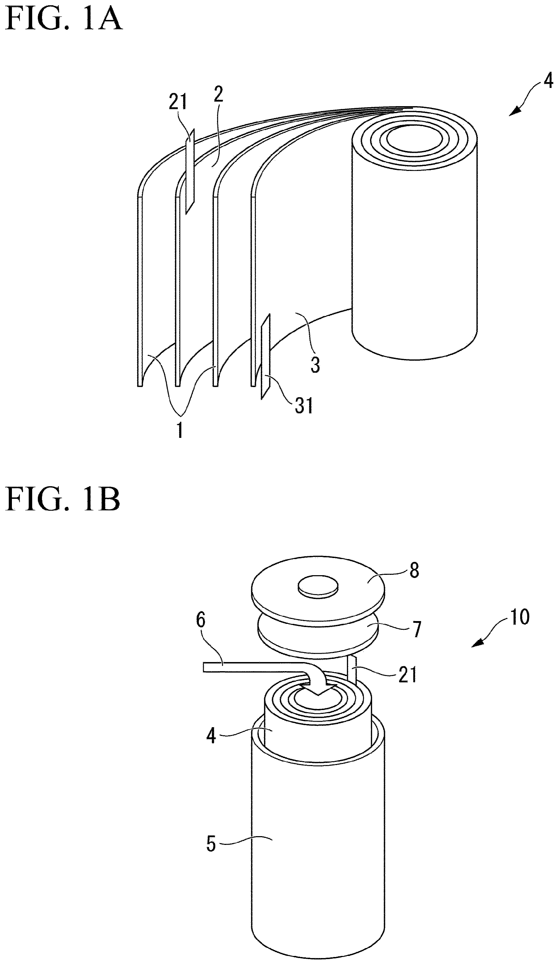

Fig. 1A is a schematic configuration view illustrating an example of a lithium-ion secondary battery.

Fig. 1B is a schematic configuration view illustrating an example of the lithium-ion secondary battery.

[Description of Embodiments]

In the present specification, a "specific surface area" is a value measured by the BET (Brunauer, Emmet, Teller) method. In the measurement of the BET specific surface area, nitrogen gas is used as an adsorption gas. For example, the BET specific surface area is a value obtained by drying 1 g of a powder of a measurement object in a nitrogen atmosphere at 105°C for 30 minutes, and measuring the powder using a BET specific surface area meter (for example, Macsorb (registered trademark) manufactured by MOUNTECH Co., Ltd.).

In the present specification, regarding a "crystallite diameter", powder X-ray diffraction measurement is performed using CuKa as a radiation source in a diffraction angle $2\theta$ measurement range of 10° or more and 90° or less, the half-widths of a diffraction peak in a range of $2\theta = 18.7 \pm 1°$ and a diffraction peak in a range of $2\theta = 64.5 \pm 1°$ are calculated, and a crystallite diameter can be calculated by using the Scherrer equation $L = K\lambda/B\cos\theta$ (L: crystallite diameter, K: Scherrer constant, $\lambda$: X-ray wavelength B: diffraction peak half-width, $\theta$: Bragg angle). Calculation of a crystallite size (crystallite diameter) by the above equation is a method hitherto used (for example, refer to "X-ray structure analysis-determine arrangement of atoms" issued April 30, 2002, Third Edition, Yoshio Waseda, Matsubara Eiichiro).

In the present specification, the notation "Li" does not indicate a corresponding simple metal but indicates a Li element unless otherwise specified. The same applies to other elements such as Ni, Co, and Mn.

In the present specification, the compositional analysis of a lithium composite metal compound is performed by an inductively coupled plasma analysis method (hereinafter, referred to as ICP). For example, after dissolving a powder of a measurement object in hydrochloric acid or the like, the compositional analysis can be performed using an inductively coupled plasma emission analyzer (for example, SPS 3000, manufactured by SII Nano Technology Inc.). The proportions of elements of the lithium composite metal compound are values of the lithium composite metal compound in a positive electrode active material for lithium secondary batteries before initial charge (also referred to as activation treatment).

<Lithium Composite Metal Compound>

The present invention relates to a lithium composite metal compound represented by Composition Formula (I), in which, in a powder X-ray diffraction measurement using CuKa radiation, when a crystallite diameter calculated from a diffraction peak in a range of $2\theta = 18.7 \pm 1°$ is defined as La and a crystallite diameter calculated from a diffraction peak in a range of $2\theta = 64.5 \pm 1°$ is defined as Lb, the ratio ($L_a/L_b$) of $L_a$ to $L_b$ is $L_a/L_b \leq 1.3$.

$$Li[Li_x(Ni_{(1-y-z)}Co_yM_z)_{1-x}]O_2 \qquad (I)$$

(in Formula (I), M is one or more metal elements selected from the group consisting of Mn, Fe, Cu, Ti, Mg, Al, W, B, Mo, Zn, Sn, Zr, Ga, Nb, and V, and $-0.1 \leq x \leq 0.2$, $0 < y \leq 0.3$, and $0 \leq z \leq 0.2$ are satisfied.)

"$L_a$" is a crystallite diameter obtained from a peak in a range of $2\theta = 18.7 \pm 1°$ in the powder X-ray diffraction measurement using CuKa radiation. In a case where the lithium composite metal compound has a hexagonal crystal structure belonging to the space group R-3m, La is a [003]-oriented crystallite diameter.

"Lb" is a crystallite diameter obtained from a peak in a range of $2\theta = 64.5 \pm 1°$ in the powder X-ray diffraction measurement using CuKa radiation. In the case where the lithium composite metal compound has a hexagonal crystal structure belonging to the space group R-3m, Lb is a [018]-oriented crystallite diameter.

$[L_a/L_b]$

In the lithium composite metal compound of the present embodiment, the ratio (La/Lb) of La to Lb is $L_a/L_b \leq 1.3$. $L_a/L_b$ is preferably 1.29 or less, more preferably 1.28 or less, and particularly preferably 1.27 or less. The lower limit of $L_a/L_b$ is not particularly limited, and for example, $L_a/L_b$ is 0.1 or more, 0.2 or more, and 0.3 or more, and more preferably 0.8 or more, 0.85 or more, and 0.9 or more.

The upper limit and the lower limit of $L_a/L_b$ can be randomly combined. For example, $L_a/L_b$ may be 0.1 or more and 1.29 or less, 0.2 or more and 1.28 or less, 0.3 or more and 1.27 or less, 0.8 or more and 1.29 or less, 0.85 or more and 1.28 or less, or 0.9 or more and 1.27 or less.

As one aspect of the present invention, $L_a/L_b$ may be 0.80 or more and 1.25 or less, 0.85 or more and 1.07 or less, 0.90 or more and 1.04 or less, or 1.00 or more and 1.04 or less.

The lithium composite metal compound of the present embodiment satisfies $L_a/L_b \leq 1.3$, and has a highly isotropic crystallite structure. According to the examination of the present inventors, it has been found that a lithium composite metal compound that satisfies $L_a/L_b \leq 1.3$ and is highly isotropic has a high cycle retention ratio under a high voltage with an upper limit voltage of 4.45 V.

[Composition Formula (I)]

The lithium composite metal compound of the present embodiment is represented by Composition Formula (I).

$$Li[Li_x(Ni_{(1-y-z)}Co_yM_z)_{1-x}]O_2 \qquad (I)$$

(in Formula (I), M is one or more metal elements selected from the group consisting of Mn, Fe, Cu, Ti, Mg, Al, W, B, Mo, Zn, Sn, Zr, Ga, Nb, and V, and $-0.1 \leq x \leq 0.2$, $0 < y \leq 0.3$, and $0 \leq z \leq 0.2$ are satisfied.)

• x

From the viewpoint of obtaining a lithium secondary battery having a high cycle retention ratio, x in Formula (I) is preferably -0.1 or more, more preferably -0.05 or more, and particularly preferably more than 0. In addition, from the viewpoint of obtaining a lithium secondary battery having higher initial Coulombic efficiency, x in Formula (I) is preferably 0.2 or less, more preferably 0.08 or less, and even more preferably 0.06 or less.

The upper limit and the lower limit of x can be randomly combined.

In Composition Formula (I), x more preferably satisfies $0 < x \leq 0.2$, even more preferably satisfies $0 < x \leq 0.08$, and particularly preferably satisfies $0 < x \leq 0.06$.

• y

In addition, from the viewpoint of obtaining a lithium secondary battery having low battery resistance, y in Formula (I) is more preferably more than 0, and even more preferably 0.05 or more. y in Formula (I) is preferably 0.3 or less, more preferably 0.29 or less, and even more preferably 0.28 or less.

The upper limit and the lower limit of y can be randomly combined. For example, y is preferably more than 0 and 0.3 or less, more preferably 0.05 or more and 0.29 or less, and even more preferably 0.05 or more and 0.28 or less.

• z

In addition, from the viewpoint of obtaining a lithium secondary battery having a high cycle retention ratio, z in Formula (I) is preferably more than 0, and more preferably 0.03 or more. In addition, z in Formula (I) is preferably 0.2 or less, more preferably 0.18 or less, and even more preferably 0.17 or less.

The upper limit and the lower limit of z can be randomly combined. For example, z is preferably 0 or more and 0.2 or less, more preferably 0.03 or more and 0.18 or less, and even more preferably 0.03 or more and 0.17 or less.

M in Composition Formula (I) represents one or more metal elements selected from the group consisting of Mn, Fe, Cu, Ti, Mg, Al, W, B, Mo, Zn, Sn, Zr, Ga, Nb, and V. From the viewpoint of obtaining a lithium secondary battery having a high cycle retention ratio, M is preferably one or more metals selected from the group consisting of Mn, Ti, Mg, Al, W, B, and Zr, and preferably one or more metals selected from the group consisting of Mn, Al, W, B, and Zr.

[600 Å $\leq$ L$_b$ $\leq$ 800 Å]

In the lithium composite metal compound of the present embodiment, in the powder X-ray diffraction measurement using CuKa radiation, when a crystallite diameter calculated from a diffraction peak in a range of $2\theta = 64.5 \pm 1°$ is referred to as Lb, 600 Å $\leq$ Lb $\leq$ 800 Å is preferably satisfied.

From the viewpoint of obtaining a lithium secondary battery having a high cycle retention ratio, Lb is preferably 600 Å or more, more preferably 610 Å or more, and particularly preferably 620 Å or more. In addition, Lb is preferably 800 Å or less, more preferably 790 Å or less, and particularly preferably 780 Å or less. The upper limit and the lower limit of Lb can be randomly combined. For example, Lb is preferably 600 Å or more and 800 Å or less, more preferably 610 Å or more and 800 Å or less, even more preferably 610 Å or more and 790 Å or less, and particularly preferably 620 Å or more and 780 Å or less.

[BET Specific Surface Area]

In the present embodiment, the BET specific surface area ($m^2/g$) of the lithium composite metal compound is preferably 3.0 $m^2/g$ or less, more preferably 2.9 $m^2/g$ or less, and particularly preferably 2.8 $m^2/g$ or less. The lower limit thereof is preferably more than 0.4 $m^2/g$, more preferably 0.5 $m^2/g$ or more, and even more preferably 0.6 $m^2/g$ or more.

The upper limit and the lower limit of the BET specific surface area ($m^2/g$) of the lithium composite metal compound can be randomly combined.

For example, the BET specific surface area of the lithium composite metal compound of the present embodiment is preferably more than 0.4 $m^2/g$ and 3.0 $m^2/g$ or less, more preferably 0.5 $m^2/g$ or more and 2.9 $m^2/g$ or less, and particularly preferably 0.6 $m^2/g$ or more and 2.8 $m^2/g$ or less.

[Amount of Lithium Hydroxide]

In the present embodiment, from the viewpoint of easy handleability of the positive electrode active material in a case of being used as a positive electrode active material for lithium secondary batteries, the amount of lithium hydroxide obtained as a conversion value from the result of neutralization titration of the lithium composite metal compound is preferably 0.3 mass% or less, more preferably 0.20 mass% or less, and particularly preferably 0.15 mass% or less with respect to the total mass of the lithium composite metal compound. The lower limit of the amount of lithium hydroxide may be 0 mass%, and for example, may be 0.001 mass% with respect to the total mass of the lithium composite metal compound. The upper limit and the lower limit of the amount of lithium hydroxide can be randomly combined. For example, the amount of lithium hydroxide is preferably 0 mass% or more and 0.3 mass% or less, more preferably 0 mass% or more and 0.20 mass% or less, and particularly preferably 0 mass% or more and 0.15 mass% or less with respect to the total mass of the lithium composite metal compound.

(Layered Structure)

The crystal structure of the lithium composite metal compound is a layered structure, and more preferably a hexagonal crystal structure or a monoclinic crystal structure.

The hexagonal crystal structure belongs to any one space group selected from the group consisting of P3, P3$_1$, P3$_2$, R3, P-3, R-3, P312, P321, P3$_1$12, P3$_1$21, P3$_2$12, P3$_2$21, R32, P3m1, P31m, P3c1, P31c, R3m, R3c, P-31m, P-31c, P-3m1, P-3c1, R-3m, R-3c, P6, P6$_1$, P6$_5$, P6$_2$, P6$_4$, P6$_3$, P-6, P6/m, P6$_3$/m, P622, P6$_1$22, P6$_5$22, P6$_2$22, P6$_4$22, P6$_3$22, P6mm, P6cc, P6$_3$cm, P6$_3$mc, P-6m2, P-6c2, P-62m, P-62c, P6/mmm, P6/mcc, P6$_3$/mcm, and P6$_3$/mmc.

In addition, the monoclinic crystal structure belongs to any one space group selected from the group consisting of P2, P2$_1$, C2, Pm, Pc, Cm, Cc, P2/m, P2$_1$/m, C2/m, P2/c, P2$_1$/c, and C2/c.

Among these, from the viewpoint of obtaining a lithium secondary battery having a high discharge capacity, the crystal structure is particularly preferably a hexagonal crystal structure belonging to the space group R-3m, or a monoclinic crystal structure belonging to C2/m.

<Method for Manufacturing Lithium Composite Metal Compound>

A method for manufacturing a lithium composite metal compound of the present invention preferably includes a step of manufacturing a metal composite compound containing nickel and cobalt and, as desired, M, and a step of manufacturing a lithium composite metal compound using the metal composite compound and a lithium salt.

In manufacturing the lithium composite metal compound of the present invention, first, a metal composite compound including metals other than lithium, that is, Ni and Co which are essential metals, or a metal composite compound including Ni and Co which are essential metals, and any one or more optional metals (hereinafter, described as "optional metal M") of Mn, Fe, Cu, Ti, Mg, Al, W, B, Mo, Zn, Sn, Zr, Ga, Nb, and V is prepared. Next, the metal composite compound is calcined with an appropriate lithium salt. The optional metal is a metal optionally contained in the metal composite compound as desired, and the optional metal may not be contained in the metal composite compound in some cases.

As the metal composite compound, a metal composite hydroxide or a metal composite oxide is preferable.

Hereinafter, an example of a manufacturing method of a positive electrode active material will be described by separately describing a step of manufacturing the metal composite compound and a step of manufacturing the lithium composite metal compound.

(Step of Manufacturing Metal Composite Compound)

The metal composite compound can be produced by a generally known batch coprecipitation method or continuous coprecipitation method. Hereinafter, the manufacturing method will be described in detail, taking a metal composite hydroxide containing nickel and cobalt as metals and an optional metal M as an example.

First, by a coprecipitation method, particularly a continuous method described in Japanese Unexamined Patent Application, First Publication No. 2002-201028, a nickel salt solution, a cobalt salt solution, an optional metal M salt solution, and a complexing agent are reacted, whereby a composite metal hydroxide represented by $Ni_{(1-y-z)}Co_yM_z(OH)_2$ (in the formula, $0 < y \le 0.3$, and $0 \le z \le 0.2$) is manufactured.

A nickel salt which is a solute of the nickel salt solution is not particularly limited, and for example, any of nickel sulfate, nickel nitrate, nickel chloride, and nickel acetate can be used. As a cobalt salt which is a solute of the cobalt salt solution, for example, any of cobalt sulfate, cobalt nitrate, and cobalt chloride can be used. The above metal salts are used at a ratio corresponding to the composition ratio of the $Ni_{(1-y-z)}Co_yM_z(OH)_2$. That is, the amount of each of the metal salts is defined so that the molar ratio between nickel, cobalt, and the optional metal M in the mixed solution containing the above metal salts becomes $(1 - y - z):y:z$. Also, water is used as a solvent.

The complexing agent is capable of forming a complex with ions of nickel, cobalt, and the optional metal M in an aqueous solution, and examples thereof include ammonium ion donors (ammonium sulfate, ammonium chloride, ammonium carbonate, ammonium fluoride, and the like), hydrazine, ethylenediaminetetraacetic acid, nitrilotriacetic acid, uracildiacetic acid, and glycine. The complexing agent may not be contained, and in a case where the complexing agent is contained, the amount of the complexing agent contained in the mixed solution containing the nickel salt solution, the cobalt salt solution, the optional metal M salt solution, and the complexing agent is, for example, more than 0 and 2.0 or less in terms of molar ratio to the sum of the number of moles of the metal salts.

During the precipitation, an alkali metal hydroxide (for example, sodium hydroxide, or potassium hydroxide) is added, if necessary, in order to adjust the pH value of the aqueous solution.

When the nickel salt solution, the cobalt salt solution, the optional metal M salt solution in addition to the complexing agent are continuously supplied to a reaction tank, nickel, cobalt, and the optional metal M react, whereby $Ni_{(1-y-z)}Co_yM_z(OH)_2$ is manufactured. During the reaction, the temperature of the reaction tank is controlled to be, for example, in a range of 20°C or higher and 80°C or lower, and preferably 30°C or higher 70°C or lower, and the pH value in the reaction tank when measured at 40°C is controlled to be, for example, in a range of a pH of 9 or more and a pH of 13 or less, and preferably a pH of 10 or more and 13 or less such that the materials in the reaction tank are appropriately stirred. The reaction tank is of a type which causes the formed reaction precipitate to overflow for separation.

By appropriately controlling the concentrations of the metal salts supplied to the reaction tank, the stirring speed, the reaction temperature, the reaction pH, calcining conditions, which will be described later, and the like, a lithium composite metal compound which is finally obtained can be controlled to have the desired physical properties.

After the above reaction, the obtained reaction precipitate is washed with water and then dried to isolate a nickel cobalt optional metal M hydroxide as a nickel cobalt optional metal M composite compound. In addition, the obtained reaction precipitate may be washed with a weak acid water or an alkaline solution containing sodium hydroxide or potassium hydroxide, as necessary. In the above example, the nickel cobalt optional metal M composite hydroxide is manufactured, but a nickel cobalt optional metal M composite oxide may be prepared. When a nickel cobalt optional metal M composite oxide is adjusted from the nickel cobalt optional metal M composite hydroxide, an oxidizing step of calcining the nickel cobalt optional metal M composite hydroxide at a temperature of 300°C or higher and 800°C or lower for 1 hour or longer and 10 hours or shorter so as to be oxidized may be performed.

(Step of Manufacturing Lithium Composite Metal Compound)

• Mixing Step

The metal composite oxide or hydroxide is dried and thereafter mixed with a lithium salt.

As the lithium salt used in the present invention, any one or two or more of lithium carbonate, lithium nitrate, lithium sulfate, lithium acetate, lithium hydroxide, lithium hydroxide hydrate, lithium oxide, lithium chloride, and lithium fluoride can be mixed and used. Among these, one or both of lithium hydroxide and lithium carbonate are preferable.

After drying the metal composite oxide or hydroxide, classification may be appropriately performed thereon.

• Main Calcining Step

By calcining a mixture of the nickel cobalt optional metal M metal composite hydroxide or composite metal oxide and the lithium salt, a lithium-nickel cobalt optional metal M composite oxide is obtained. This calcining step is referred to as a "main calcining step". For the calcining, dry air, oxygen atmosphere, inert atmosphere, or the like is used depending on the desired composition, and a main calcining step having a plurality of heating steps is performed as necessary.

The calcining temperature of the metal composite oxide or hydroxide and the lithium salt such as lithium hydroxide or lithium carbonate is not particularly limited, but is preferably 650°C or higher and 1100°C or lower, more preferably 690°C or higher and 1050°C or lower, and even more preferably 700°C or higher and 1025°C or lower. The calcining temperature means the temperature of the atmosphere in a calcining furnace.

The calcining time is preferably 3 hours or longer and 50 hours or shorter. When the calcining time exceeds 50 hours, the battery performance tends to be substantially inferior due to volatilization of lithium. When the calcining time is shorter than 3 hours, the crystals grow insufficiently, and the battery performance tends to be deteriorated.

It is preferable that the time until the calcining temperature is reached after the start of temperature increase be 0.5 hours or longer and 20 hours or shorter. When the time until the calcining temperature is reached after the start of temperature increase is in this range, a more uniform lithium nickel composite oxide can be obtained. In addition, it is preferable that the time until the temperature retention is ended after the calcining temperature is reached be 0.5 hours or longer and 20 hours or shorter. When the time until the temperature retention is ended after the calcining temperature is reached is in this range, the crystal growth proceeds more favorably and the battery performance can be further improved.

In the present embodiment, by performing the main calcining step at the above calcining temperature and calcining time, $L_a/L_b$ can be controlled to be 1.3 or less, and a calcined product having a highly isotropic crystal structure can be formed.

• Washing Step

After the main calcining step, a washing step of washing the calcined product is preferably performed. It is considered that by performing the washing step, lithium is removed from the crystal structure of the calcined product and the crystal structure is changed such that the isotropy of the crystallite increases.

In the present embodiment, as a method of bringing a washing solution into contact with the calcined product, there are a method of adding the calcined product into the washing solution and stirring the resultant, a method of applying the washing solution as shower water to the calcined product, and a method of adding a wet cake of the calcined product into the washing solution and stirring the resultant (re-slurry or re-pulp).

•• Slurry Concentration

In the present embodiment, in the washing step, it is preferable to form a slurry by mixing the washing solution and the calcined product, and to wash the powder of the calcined product by stirring the slurry.

In this case, the ratio of the mass of the calcined product powder (slurry concentration) to the total mass of the mixture (slurry) of the washing solution and the calcined product powder is not particularly limited, but is adjusted to preferably 5 mass% or more, and more preferably 10 mass% or more. Furthermore, the ratio is adjusted to preferably 65 mass% or less, and more preferably 60 mass% or less. The upper limit and the lower limit of the slurry concentration can be randomly combined. For example, the slurry concentration is adjusted to preferably 5 mass% or more and 65 mass% or less, and more preferably 10 mass% or more and 60 mass% or less.

By causing the slurry concentration to be in the above range, lithium is appropriately eluted from the calcined product, the crystal structure of the calcined product changes, and a lithium composite metal compound having a highly isotropic crystal structure can be formed. Furthermore, the BET specific surface area and the amount of lithium hydroxide of the lithium composite metal compound can be controlled within the preferable ranges of the present invention.

•• Washing Time etc.

In the present embodiment, examples of the washing solution used in the washing step include water and an aqueous alkaline solution. In the present embodiment, water is preferable.

In the present embodiment, the washing time is not particularly limited, but is preferably 1 minute or longer, and more preferably 5 minutes or longer from the viewpoint of sufficiently removing impurities. In addition, from the viewpoint of suppressing excessive washing, the washing time is preferably 60 minutes or shorter, and more preferably 30 minutes or shorter. The upper limit and the lower limit of the washing time can be randomly combined. For example, the washing time is set to preferably 1 minute or longer and 60 minutes or shorter, and more preferably 5 minutes or longer and 30 minutes or shorter.

The temperature of the washing water used for washing is preferably 0°C or higher and 30°C or lower, and more preferably 5°C or higher and 25°C or lower.

By setting the washing time and the like to the above conditions, lithium is appropriately eluted from the calcined product, the crystal structure of the calcined product changes, and a lithium composite metal compound having a highly isotropic crystal structure can be formed. Furthermore, the BET specific surface area and the amount of lithium hydroxide of the lithium composite metal compound can be controlled within the preferable ranges of the present invention. By performing the washing step, the cohesion of the calcined product is lessened, so that the BET specific surface area can be increased.

•• Addition Rate of Calcined Powder into Washing Solution

In the present embodiment, when the slurry is formed by mixing the washing solution and the calcined product, the method of adding the calcined powder into the stirred washing solution is preferable.

In this case, the addition rate of the calcined powder into the washing solution is preferably 100 g/min or more per 1 L of the washing solution from the viewpoint of preventing sedimentation of the calcined powder, and preferably 3500 g/min or less per 1 L of the washing solution from the viewpoint of uniform washing.

By setting the addition rate of the calcined powder into the washing solution to the above conditions, excessive elution of lithium from the calcined product can be prevented, and a lithium composite metal compound having excellent cycle characteristics can be formed. Furthermore, the BET specific surface area and the amount of lithium hydroxide of the lithium composite metal compound can be controlled within the preferable ranges of the present invention.

• Drying Step

After the washing step, the calcined product is separated from the washing solution by filtration or the like. Thereafter, the calcined product is dried, pulverized, and then appropriately classified to obtain a lithium composite metal compound applicable to a lithium secondary battery.

In the present embodiment, a highly isotropic crystallite can be formed by drying the calcined product after the washing.

The temperature and method of the drying step are not particularly limited, but the drying temperature is preferably 30°C or higher, more preferably 40°C or higher, and even more preferably 50°C or higher from the viewpoint of sufficiently removing moisture.

In addition, from the viewpoint of preventing the formation of a heterophase on the surface of the lithium composite metal compound, the drying temperature is preferably 300°C or lower, more preferably 250°C or lower, and even more preferably 200°C or lower.

The upper limit and the lower limit of the temperature of the drying step can be randomly combined. For example, the temperature of the drying step is preferably 30°C or higher and 300°C or lower, more preferably 40°C or higher and 250°C or lower, and even more preferably 50°C or higher and 200°C or lower.

There are cases where the method for manufacturing a lithium composite metal compound includes a re-calcining step after the drying step. However, in the present embodiment, by the manufacturing using the manufacturing method without the re-calcining step, the lithium composite metal compound in which the anisotropic growth of crystallites is suppressed can be easily obtained.

<Lithium Secondary Battery>

Next, a positive electrode using a positive electrode active material for lithium secondary batteries of the present invention as a positive electrode active material of a lithium secondary battery, and a lithium secondary battery having the positive electrode will be described while describing the configuration of a lithium secondary battery.

An example of the lithium secondary battery of the present embodiment includes a positive electrode, a negative electrode, a separator interposed between the positive electrode and the negative electrode, and an electrolytic solution disposed between the positive electrode and the negative electrode.

Figs. 1A and 1B are schematic views illustrating an example of the lithium secondary battery of the present embodiment. A cylindrical lithium secondary battery 10 of the present embodiment is manufactured as follows.

First, as illustrated in Fig. 1A, a pair of separators 1 having a strip shape, a strip-shaped positive electrode 2 having a positive electrode lead 21 at one end, and a strip-like negative electrode 3 having a negative electrode lead 31 at one end are stacked in order of the separator 1, the positive electrode 2, the separator 1, and the negative electrode 3 and are wound to form an electrode group 4.

Next, as shown in Fig. 1B, the electrode group 4 and an insulator (not illustrated) are accommodated in a battery can 5, the can bottom is then sealed, the electrode group 4 is impregnated with an electrolytic solution 6, and an electrolyte is disposed between the positive electrode 2 and the negative electrode 3. Furthermore, the upper portion of the battery can 5 is sealed with a top insulator 7 and a sealing body 8, whereby the lithium secondary battery 10 can be manufactured.

The shape of the electrode group 4 is, for example, a columnar shape such that the cross-sectional shape when the electrode group 4 is cut in a direction perpendicular to the winding axis is a circle, an ellipse, a rectangle, or a rectangle with rounded corners.

In addition, as a shape of the lithium secondary battery having the electrode group 4, a shape defined by IEC60086 which is a standard for a battery defined by the International Electrotechnical Commission (IEC), or by JIS C 8500 can be adopted. For example, shapes such as a cylindrical shape and a square shape can be adopted.

Furthermore, the lithium secondary battery is not limited to the wound type configuration, and may have a stacked type configuration in which a stacked structure of a positive electrode, a separator, a negative electrode, and a separator is repeatedly stacked. The stacked type lithium secondary battery can be exemplified by a so-called coin type battery, a button type battery, and a paper type (or sheet type) battery.

Hereinafter, each configuration will be described in order.

(Positive Electrode)

The positive electrode of the present embodiment can be manufactured by first adjusting a positive electrode mixture containing a positive electrode active material, a conductive material, and a binder, and causing a positive electrode current collector to hold the positive electrode mixture.

(Conductive Material)

A carbon material can be used as the conductive material included in the positive electrode of the present embodiment. As the carbon material, there are graphite powder, carbon black (for example, acetylene black), a fibrous carbon material, and the like. Since carbon black is fine particles and has a large surface area, the addition of a small amount of carbon black to the positive electrode mixture increases the conductivity inside the positive electrode and thus improve the charge and discharge efficiency and output characteristics. However, when the carbon black is added too much, both the binding force between the positive electrode mixture and the positive electrode current collector and the binding force inside the positive electrode mixture by the binder decrease, which causes an increase in internal resistance.

The proportion of the conductive material in the positive electrode mixture is preferably 5 parts by mass or more and 20 parts by mass or less with respect to 100 parts by mass of the positive electrode active material. In a case of using a fibrous carbon material such as graphitized carbon fiber or carbon nanotube as the conductive material, the proportion can be reduced. The ratio of the positive electrode active material to the total mass of the positive electrode mixture is preferably 80 to 98 mass%.

(Binder)

A thermoplastic resin can be used as the binder included in the positive electrode of the present embodiment.

As the thermoplastic resin, fluorine resins such as polyvinylidene fluoride (hereinafter, sometimes referred to as PVdF), polytetrafluoroethylene (hereinafter, sometimes referred to as PTFE), tetrafluoroethylene-hexafluoropropylene-vinylidene fluoride copolymers, hexafluoropropylene-vinylidene fluoride copolymers, and tetrafluoroethylene-perfluorovinyl ether copolymers; and polyolefin resins such as polyethylene and polypropylene can be adopted.

These thermoplastic resins may be used as a mixture of two or more. By using a fluorine resin and a polyolefin resin as the binder and setting the ratio of the fluorine resin to the entire positive electrode mixture to 1 mass% or more and 10 mass% or less and the ratio of the fluorine resin to 0.1 mass% or more and 2 mass% or less, a positive electrode mixture having both high adhesion to the positive electrode current collector and high bonding strength in the positive electrode mixture can be obtained.

(Positive Electrode Current Collector)

As the positive electrode current collector included in the positive electrode of the present embodiment, a strip-shaped member formed of a metal material such as Al, Ni, or stainless steel as the forming material can be used. Among these, from the viewpoint of easy processing and low cost, it is preferable to use Al as the forming material and process Al into a thin film.

As a method of causing the positive electrode current collector to hold the positive electrode mixture, a method of press-forming the positive electrode mixture on the positive electrode current collector can be adopted. In addition, the positive electrode mixture may be held by the positive electrode current collector by forming the positive electrode mixture into a paste using an organic solvent, applying the paste of the positive electrode mixture to at least one side of the positive electrode current collector, drying the paste, and pressing the paste to be fixed.

In a case of forming the positive electrode mixture into a paste, as the organic solvent which can be used, amine solvents such as N,N-dimethylaminopropylamine and diethylenetriamine; ether solvents such as tetrahydrofuran; ketone solvents such as methyl ethyl ketone; ester solvents such as methyl acetate; and amide solvents such as dimethylacetamide and N-methyl-2-pyrrolidone (hereinafter, sometimes referred to as NMP) can be adopted.

Examples of a method of applying the paste of the positive electrode mixture to the positive electrode current collector include a slit die coating method, a screen coating method, a curtain coating method, a knife coating method, a gravure coating method, and an electrostatic spraying method.

The positive electrode can be manufactured by the method mentioned above.

(Negative Electrode)

The negative electrode included in the lithium secondary battery of the present embodiment may be capable of being doped with or dedoped from lithium ions at a potential lower than that of the positive electrode, and an electrode in which a negative electrode mixture containing a negative electrode active material is held by a negative electrode current collector, and an electrode formed of a negative electrode active material alone can be adopted.

(Negative Electrode Active Material)

As the negative electrode active material included in the negative electrode, materials that can be doped with or dedoped from lithium ions at a potential lower than that of the positive electrode, such as carbon materials, chalcogen compounds (oxides, sulfides, and the like), nitrides, metals, and alloys can be adopted.

As the carbon materials that can be used as the negative electrode active material, graphite such as natural graphite and artificial graphite, cokes, carbon black, pyrolytic carbons, carbon fibers, and an organic polymer compound calcined body can be adopted.

As the oxides that can be used as the negative electrode active material, oxides of silicon represented by the formula $SiOx$ (where, x is a positive real number) such as $SiO_2$ and $SiO$; oxides of titanium represented by the formula $TiOx$ (where x is a positive real number) such as $TiO_2$ and $TiO$; oxides of vanadium represented by the formula $VOx$ (where x is a positive real number) such as $V_2O_5$ and $VO_2$; oxides of iron represented by the formula $FeOx$ (where x is a positive real number) such as $Fe_3O_4$, $Fe_2O_3$, and $FeO$; oxides of tin represented by the formula $SnOx$ (where x is a positive real number) such as $SnO_2$ and $SnO$; oxides of tungsten represented by a general formula $WOx$ (where, x is a positive real number) such as $WO_3$ and $WO_2$; and composite metal oxides containing lithium and titanium or vanadium such as $Li_4Ti_5O_{12}$ and $LiVO_2$ can be adopted.

As the sulfides that can be used as the negative electrode active material, sulfides of titanium represented by the formula $TiSx$ (where, x is a positive real number) such as $Ti2S3$, $TiS2$, and $TiS$; sulfides of vanadium represented by the formula $VS_x$ (where x is a positive real number) such $V_3S_4$, $VS_2$, and $VS$; sulfides of iron represented by the formula $FeSx$ (where x is a positive real number) such as $Fe3S4$, $FeS2$, and $FeS$; sulfides of molybdenum represented by the formula $MoSx$ (where x is a positive real number) such as $Mo_2S_3$ and $MoS_2$; sulfides of tin represented by the formula $SnSx$ (where x is a positive real number) such as $SnS2$ and $SnS$; sulfides of tungsten represented by $WS_x$ (where x is a positive real number) such as $WS_2$; sulfides of antimony represented by the formula $SbSx$ (where x is a positive real number) such as $Sb2S3$; and sulfides of selenium represented by the formula $SeS_x$ (where x is a positive real number) such as $Se_5S_3$, $SeS_2$, and $SeS$ can be adopted.

As the nitrides that can be used as the negative electrode active material, lithium-containing nitrides such as $Li_3N$ and $Li_{3-x}A_xN$ (where A is either one or both of Ni and Co, and $0 < x < 3$ is satisfied) can be adopted.

These carbon materials, oxides, sulfides, and nitrides may be used singly or in combination of two or more. In addition, these carbon materials, oxides, sulfides, and nitrides may be either crystalline or amorphous.

Moreover, as the metals that can be used as the negative electrode active material, lithium metal, silicon metal, tin metal, and the like can be adopted.

As the alloys that can be used as the negative electrode active material, lithium alloys such as Li-Al, Li-Ni, Li-Si, Li-Sn, and Li-Sn-Ni; silicon alloys such as Si-Zn; tin alloys such as Sn-Mn, Sn-Co, Sn-Ni, Sn-Cu, and Sn-La; and alloys such as Cu2Sb and La3Ni2Sn7 can be adopted.

These metals and alloys are mainly used alone as an electrode after being processed into, for example, a foil shape.

Among the above-mentioned negative electrode active materials, the carbon material mainly including graphite such as natural graphite and artificial graphite is preferably used because the potential of the negative electrode hardly changes from the uncharged state to the fully charged state during charging (the potential flatness is good), the average discharge potential is low, and the capacity retention ratio during repeated charging and discharging is high (the cycle characteristics are good). The shape of the carbon material may be, for example, a flaky shape such as natural graphite, a spherical shape such as mesocarbon microbeads, a fibrous shape such as graphitized carbon fiber, or an aggregate of fine powder.

The negative electrode mixture described above may contain a binder as necessary. As the binder, a thermoplastic resin can be adopted, and specifically, PVdF, thermoplastic polyimide, carboxymethylcellulose, polyethylene, and polypropylene can be adopted.

(Negative Electrode Current Collector)

As the negative electrode current collector included in the negative electrode, a strip-shaped member formed of a metal material, such as Cu, Ni, and stainless steel, as the forming material can be adopted. Among these, it is preferable to use Cu as the forming material and process Cu into a thin film because Cu is less likely to form an alloy with lithium and can be easily processed.

As a method of causing the negative electrode current collector to hold the negative electrode mixture, similarly to the case of the positive electrode, a method using press-forming, or a method of forming the negative electrode mixture into a paste using a solvent or the like, applying the paste onto the negative electrode current collector, drying the paste, and pressing the paste to be compressed can be adopted.

(Separator)

As the separator included in the lithium secondary battery of the present embodiment, for example, a material having a form such as a porous film, non-woven fabric, or woven fabric made of a material such as a polyolefin resin such as polyethylene and polypropylene, a fluorine resin, and a nitrogen-containing aromatic polymer can be used. In addition, two or more of these materials may be used to form the separator, or these materials may be stacked to form the separator.

In the present embodiment, the air resistance of the separator according to the Gurley method defined by JIS P 8117 is preferably 50 sec/100 cc or more and 300 sec/100 cc or less, and more preferably 50 sec/100 cc or more and 200 sec/100 cc or less in order for the electrolyte to favorably permeate therethrough during battery use (during charging and discharging).

In addition, the porosity of the separator is preferably 30 vol% or more and 80 vol% or less, and more preferably 40 vol% or more and 70 vol% or less with respect to the volume of the separator. The separator may be a laminate of separators having different porosity.

(Electrolytic Solution)

The electrolytic solution included in the lithium secondary battery of the present embodiment contains an electrolyte and an organic solvent.

As the electrolyte contained in the electrolytic solution, lithium salts such as $LiClO_4$, $LiPF_6$, $LiAsF_6$, $LiSbF_6$, $LiBF_4$, $LiCF_3SO_3$, $LiN(SO_2CF_3)_2$, $LiN(SO_2C_2F_5)_2$, $LiN(SO_2CF_3)(COCF_3)$, $Li(C_4F_9SO_3)$, $LiC(SO_2CF_3)_3$, $Li_2B_{10}Cl_{10}$, Li-BOB (here, BOB refers to bis(oxalato)borate), LiFSI (here, FSI refers to bis(fluorosulfonyl)imide), lower aliphatic carboxylic acid lithium salts, and $LiAlCl_4$ can be adopted, and a mixture of two or more of these may be used. Among these, as the electrolyte, it is preferable to use at least one selected from the group consisting of $LiPF_6$, $LiAsF_6$, $LiSbF_6$, $LiBF_4$,

$LiCF_3SO_3$, $LiN(SO_2CF_3)_2$, and $LiC(SO_2CF_3)_3$, which contain fluorine.

As the organic solvent included in the electrolytic solution, for example, carbonates such as propylene carbonate, ethylene carbonate, dimethyl carbonate, diethyl carbonate, ethyl methyl carbonate, 4-trifluoromethyl-1,3-dioxolan-2-one, and 1,2-di(methoxycarbonyloxy)ethane; ethers such as 1,2-dimethoxyethane, 1,3-dimethoxypropane, pentafluoropropyl methyl ether, 2,2,3,3-tetrafluoropropyl difluoromethyl ether, tetrahydrofuran, and 2-methyltetrahydrofuran; esters such as methyl formate, methyl acetate, and g-butyrolactone; nitriles such as acetonitrile and butyronitrile; amides such as N,N-dimethylformamide and N,N-dimethylacetamide; carbamates such as 3-methyl-2-oxazolidone; and sulfur-containing compounds such as sulfolane, dimethyl sulfoxide, and 1,3-propanesultone, or those obtained by introducing a fluoro group into these organic solvents (those in which one or more of the hydrogen atoms of the organic solvent are substituted with a fluorine atom) can be used.

As the organic solvent, it is preferable to use a mixture of two or more thereof. Among these, a mixed solvent containing a carbonate is preferable, and a mixed solvent of a cyclic carbonate and a non-cyclic carbonate and a mixed solvent of a cyclic carbonate and an ether are more preferable. As the mixed solvent of a cyclic carbonate and a non-cyclic carbonate, a mixed solvent containing ethylene carbonate, dimethyl carbonate, and ethyl methyl carbonate is preferable. An electrolytic solution using such a mixed solvent has many features such as a wide operating temperature range, being less likely to deteriorate even when charged and discharged at a high current rate, being less likely to deteriorate even during a long-term use, and being non-degradable even in a case where a graphite material such as natural graphite or artificial graphite is used as the negative electrode active material.

Furthermore, as the electrolytic solution, it is preferable to use an electrolytic solution containing a lithium salt containing fluorine such as $LiPF_6$ and an organic solvent having a fluorine substituent in order to enhance the safety of the obtained lithium secondary battery. A mixed solvent containing ethers having a fluorine substituent, such as pentafluoropropyl methyl ether and 2,2,3,3-tetrafluoropropyl difluoromethyl ether and dimethyl carbonate is even more preferable because the capacity retention ratio is high even when charging or discharging is performed at a high current rate.

A solid electrolyte may be used instead of the electrolytic solution. As the solid electrolyte, for example, an organic polymer electrolyte such as a polyethylene oxide-based polymer compound, or a polymer compound containing at least one or more of a polyorganosiloxane chain or a polyoxyalkylene chain can be used. A so-called gel type in which a non-aqueous electrolyte is held in a polymer compound can also be used. Inorganic solid electrolytes containing sulfides such as $Li_2S\text{-}SiS_2$, $Li_2S\text{-}GeS_2$, $Li_2S\text{-}P_2S_5$, $Li_2S\text{-}B_2S_3$, $Li_2S\text{-}SiS_2\text{-}Li_3PO_4$, $Li_2S\text{-}SiS_2\text{-}Li_2SO_4$, and $Li_2S\text{-}GeS_2\text{-}P_2S_5$ can be adopted, and a mixture or two or more thereof may be used. By using these solid electrolytes, the safety of the lithium secondary battery may be further enhanced.

In addition, in a case of using a solid electrolyte in the lithium secondary battery of the present embodiment, there may be cases where the solid electrolyte plays a role of the separator, and in such a case, the separator may not be required.

Since the positive electrode active material having the above-described configuration uses the lithium composite metal compound of the present embodiment described above, in the lithium secondary battery using the positive electrode active material, the cycle retention ratio at a high voltage with an upper limit voltage of 4.45 V can be improved.

In addition, since the positive electrode having the above-described configuration has the positive electrode active material for lithium secondary batteries of the present embodiment described above, in the lithium secondary battery, the cycle retention ratio at a high voltage with an upper limit voltage of 4.45 V can be improved.

Furthermore, since the lithium secondary battery having the above-described configuration has the positive electrode described above, a secondary battery having a higher cycle retention ratio at a high voltage with an upper limit voltage of 4.45 V than in the related art can be achieved.

An aspect of the present invention is a lithium composite metal compound represented by Composition Formula (I), in which, in a powder X-ray diffraction measurement using CuKa radiation, when a crystallite diameter calculated from a diffraction peak in a range of $2\theta = 18.7 \pm 1°$ is defined as $L_a$ and a crystallite diameter calculated from a diffraction peak in a range of $2\theta = 64.5 \pm 1°$ is defined as $L_b$, a ratio ($L_a/L_b$) of $L_a$ to $L_b$ is $0.8 \leq L_a/L_b \leq 1.25$,

$$Li[Li_x(Ni_{(1-y-z)}Co_yM_z)_{1-x}]O_2 \qquad (I)$$

in Formula (I), M is Al, and $0 \leq x \leq 0.08$, $0.05 \leq y \leq 0.28$, and $0.03 \leq z \leq 0.17$ are satisfied.

In the lithium composite metal compound, the ratio ($L_a/L_b$) of $L_a$ to $L_b$ may be $0.85 \leq L_a/L_b \leq 1.07$.

In the lithium composite metal compound, the ratio ($L_a/L_b$) of $L_a$ to $L_b$ may be $0.90 \leq L_a/L_b \leq 1.04$.

In the lithium composite metal compound, the ratio ($L_a/L_b$) of $L_a$ to $L_b$ may be $1.00 \leq L_a/L_b \leq 1.04$.

In the lithium composite metal compound, $L_b$ may be 610 Å or more and 800 Å or less.

In the lithium composite metal compound, $L_b$ may be 620 Å or more and 780 Å or less.

The lithium composite metal compound may have a BET specific surface area of 0.6 $m^2$/g or more and 2.8 $m^2$/g or less.

A positive electrode for lithium secondary batteries in which a mass ratio between a positive electrode active material using the lithium composite metal compound, acetylene black, and PVdF is the positive electrode active material for lithium secondary batteries:acetylene black:PVdF = 92:5:3 and an electrode area is 1.65 $cm^2$ is formed, a coin type battery R2032 is produced including the positive electrode for the secondary battery, a separator in which a heat-resistant porous layer is laminated on a polyethylene porous film, an electrolytic solution containing 1.0 mol/L of $LiPF_6$ and ethylene carbonate, dimethyl carbonate, and ethyl methyl carbonate in a ratio of 30:35:35 (volume ratio), and a lithium negative electrode, and when the service life of the coin type battery R2032 is evaluated by a cycle test of 50 times under the following charge/discharge test conditions, and the discharge capacity retention ratio after 50 times is calculated by Formula (II), the discharge capacity retention ratio after 50 times is 84% or more.

$$\text{Discharge capacity retention ratio (\%) after 50 times} = (50\text{th discharge capacity} / \text{first discharge capacity}) \times 100 \ldots (\text{II})$$

<Charge and Discharge Test Conditions>

Test temperature: 25°C
Charging maximum voltage 4.45 V, charging current 0.5 CA, constant current constant voltage charging, ended at 0.05 CA current value
Discharging minimum voltage 2.5 V, discharging current 1.0 CA, constant current discharging

[Examples]

Next, the present invention will be described in more detail with reference to examples.
In this example, the evaluation of the lithium composite metal compound was performed as follows.

<CompositionalAnalysis>

The compositional analysis of the lithium composite metal compound manufactured by the method described below was performed by using an inductively coupled plasma emission analyzer (SPS 3000, manufactured by SII Nano Technology Inc.) after dissolving the powder of the obtained lithium composite metal compound in hydrochloric acid.

<Quantification of Lithium Hydroxide in Lithium Composite Metal Compound (Neutralization Titration)>

20 g of the lithium composite metal compound and 100 g of pure water were put into a 100 mL beaker and stirred for 5 minutes. After stirring, the lithium composite metal compound was filtered, and 0.1 mol/L of hydrochloric acid was added dropwise to 60 g of the remaining filtrate, and the pH of the filtrate was measured with a pH meter. The titration amount of hydrochloric acid at pH = 8.3 $\pm$ 0.1 at 40°C is referred to as AmL, the titration amount of hydrochloric acid at pH = 4.5 $\pm$ 0.1 at 40°C is referred to as BmL, and the concentration of lithium hydroxide contained in the lithium composite metal compound was calculated. In the following formula, the molecular weight of lithium hydroxide was calculated using each atomic weight as H; 1, Li; 6.941, and O; 16.

$$\text{Concentration (\%) of lithium hydroxide} = 0.1 \times (2A - B) / 1000 \times 23.941 / (20 \times 60 / 100) \times 100$$

<Powder X-Ray Diffraction Measurement>

The powder X-ray diffraction measurement was performed using an X-ray diffractometer (Ultima IV manufactured by Rigaku Corporation). The powder of the lithium composite metal compound was provided in a dedicated substrate, and measurement was performed using a Cu-K$\alpha$ radiation source under the conditions of a diffraction angle of $2\theta$ = 10° to 100°, a sampling width of 0.03°, and a scan speed of 20 °/min to obtain a powder X-ray diffraction pattern.
Using the integrated powder X-ray analysis software PDXL, the crystallite diameter of a diffraction peak in a range of $2\theta$ = 18.7 $\pm$ 1° and the crystallite diameter of a diffraction peak in a range of $2\theta$ = 64.5 $\pm$ 1° were obtained as $L_a$ and $L_b$, respectively, from the powder X-ray diffraction pattern, and the ratio ($L_a/L_b$) of $L_a$ to $L_b$ was calculated.

<BET Specific Surface Area Measurement>

After 1 g of the powder of the lithium composite metal compound was dried in a nitrogen atmosphere at 105°C for 30 minutes, the powder was measured (unit: m²/g) using Macsorb (registered trademark) manufactured by MOUNTECH Co., Ltd.

[Production of Lithium Secondary Battery]

• Production of Positive Electrode for Lithium Secondary Batteries

A paste-like positive electrode mixture was prepared by using a lithium composite metal compound obtained by the manufacturing method described below as a positive electrode active material, adding the positive electrode active material, a conductive material (acetylene black), and a binder (PVdF) to achieve a composition of the positive electrode active material for lithium secondary batteries:conductive material:binder = 92:5:3 (mass ratio) and performing kneading thereon. During the preparation of the positive electrode mixture, N-methyl-2-pyrrolidone was used as an organic solvent.

The obtained positive electrode mixture was applied to a 40 μm-thick Al foil serving as a current collector and dried at 150°C for 8 hours to obtain a positive electrode for lithium secondary batteries. The electrode area of the positive electrode for lithium secondary batteries was set to 1.65 cm².

• Production of Lithium Secondary Battery (Coin Type Cell)

The following operation was performed in a glove box in a dry air atmosphere.

The positive electrode produced in "Production of Positive Electrode for Lithium Secondary Batteries" was placed on the lower lid of a coin cell for coin type battery R2032 (manufactured by Hohsen Corp.) with the aluminum foil surface facing downward, and a laminated film separator (a heat-resistant porous layer (thickness 16 mm) was laminated on a polyethylene porous film) was placed thereon. 300 μL of an electrolytic solution was injected thereinto. The electrolytic solution used was prepared by dissolving, in a mixed solution of ethylene carbonate, dimethyl carbonate, and ethyl methyl carbonate in a ratio of 30:35:35 (volume ratio), LiPF$_6$ to achieve 1.0 mol/L.

Next, metal lithium was used as a negative electrode, and the negative electrode was placed on the upper side of the laminated film separator, covered with the upper lid via a gasket, and caulked by a caulking machine, whereby a lithium secondary battery (coin type battery R2032, hereinafter, sometimes referred to as "coin type battery") was produced.

• Charge and Discharge Test

[Cycle Test]

Using the coin type battery produced in "Production of Lithium Secondary Battery (Coin Type Cell)", the service life evaluation was performed by a cycle test of 50 times under the following charge/discharge test conditions. The discharge capacity retention ratio after 50 times was calculated by Formula (II). The higher the discharge capacity retention ratio after 50 times, the better the high voltage cycle characteristics.

$$\text{Discharge capacity retention ratio (\%) after 50 times} = (50\text{th discharge capacity} / \text{first discharge capacity}) \times 100 \ldots(\text{II})$$

Hereinafter, the discharge capacity retention ratio after 50 times may be referred to as "cycle retention ratio".

<Charge and Discharge Test Conditions>

Test temperature: 25°C
Charging maximum voltage 4.45 V, charging current 0.5 CA, constant current constant voltage charging, ended at 0.05 CA current value
Discharging minimum voltage 2.5 V, discharging current 1.0 CA, constant current discharging

(Example 1)

Manufacturing of Lithium Composite Metal Compound 1

[Step of Manufacturing Nickel Cobalt Aluminum Composite Hydroxide]

After water was put in a reaction tank equipped with a stirrer and an overflow pipe, an aqueous solution of sodium hydroxide was added thereto, and the liquid was maintained at a temperature of 58°C.

An aqueous solution of nickel sulfate and an aqueous solution of cobalt sulfate were mixed so that the atomic ratio between nickel atoms and cobalt atoms became 0.80:0.15, whereby a mixed raw material solution was prepared.

Next, the mixed raw material solution, 13.3 mass% of an aqueous solution of aluminum sulfate, and an aqueous solution of ammonium sulfate as a complexing agent were continuously added into the reaction tank under stirring, and nitrogen gas was continuously flowed thereinto. The flow rate of the aqueous solution of aluminum sulfate was adjusted such that the atomic ratio between nickel atoms, cobalt atoms, and aluminum atoms became 0.80:0.15:0.05. An aqueous solution of sodium hydroxide was appropriately added dropwise so that the pH of the solution in the reaction tank (when measured at 40°C) became 11.6, whereby nickel cobalt aluminum composite hydroxide particles were obtained. The obtained nickel cobalt aluminum composite hydroxide particles were washed with a sodium hydroxide solution and water, thereafter dehydrated by a centrifuge, isolated, and dried at 105°C, whereby a nickel cobalt aluminum composite hydroxide 1 was obtained.

[Oxidizing Step]

The nickel cobalt aluminum composite hydroxide 1 was calcined at 650°C for 5 hours to obtain a nickel cobalt aluminum composite oxide 1.

[Mixing Step]

The obtained nickel cobalt aluminum composite oxide 1 obtained as described above and lithium hydroxide powder were weighed to achieve Li/(Ni + Co + Al) = 1.07 (molar ratio) and mixed.

[Calcining Step]

Thereafter, the mixture obtained in the mixing step was calcined in an oxygen atmosphere at 780°C for 6 hours to obtain a calcined product 1.

[Washing Step]

Thereafter, the obtained calcined product 1 was washed with water. In the washing step, 300 g of the calcined product 1 was collected, and added to 300 g of stirred pure water at a rate of 3000 g/min per 1 L of the washing solution to produce a slurry. The obtained slurry was stirred for 10 minutes and dehydrated by filtration.

[Drying Step]

Thereafter, a wet cake obtained in the above washing step was dried at 150°C for 12 hours to obtain a lithium composite metal compound washed and dried powder 1 (hereinafter, referred to as lithium composite metal compound 1).

Evaluation of Lithium Composite Metal Compound 1

Compositional analysis of the obtained lithium composite metal compound 1 was performed, and when the composition was made to correspond to Composition Formula (I), x = 0.05, y = 0.15, and z = 0.05 were obtained.

The $L_a/L_b$, cycle retention ratio (%), BET specific surface area (unit: $m^2/g$), and amount of lithium hydroxide (unit: mass%) of the lithium composite metal compound 1 are described in Table 1.

(Example 2)

Manufacturing of Lithium Composite Metal Compound 2

[Washing Step]

The obtained calcined product 1 was washed with water. In the washing step, 300 g of the calcined product 1 was collected, and added to 700 g of stirred pure water at a rate of 1285 g/min per 1 L of the washing solution to produce a slurry. The obtained slurry was stirred for 10 minutes and dehydrated by filtration.

[Drying Step]

Thereafter, a wet cake obtained in the above washing step was dried at 150°C for 12 hours to obtain a lithium composite metal compound washed and dried powder 2 (hereinafter, referred to as lithium composite metal compound 2).

Evaluation of Lithium Composite Metal Compound 2

Compositional analysis of the obtained lithium composite metal compound 2 was performed, and when the composition was made to correspond to Composition Formula (I), x = 0.02, y = 0.15, and z = 0.05 were obtained.
The $L_a/L_b$, cycle retention ratio (%), BET specific surface area (unit: $m^2/g$), and amount of lithium hydroxide (unit: mass%) of the lithium composite metal compound 2 are described in Table 1.

(Example 3)

Manufacturing of Lithium Composite Metal Compound 3

[Step of Manufacturing Nickel Cobalt Aluminum Composite Hydroxide]

After water was put in a reaction tank equipped with a stirrer and an overflow pipe, an aqueous solution of sodium hydroxide was added thereto, and the liquid was maintained at a temperature of 70°C.
An aqueous solution of nickel sulfate and an aqueous solution of cobalt sulfate were mixed so that the atomic ratio between nickel atoms and cobalt atoms became 0.75:0.20, whereby a mixed raw material solution was prepared.
Next, the mixed raw material solution, 13.3 mass% of an aqueous solution of aluminum sulfate, and an aqueous solution of ammonium sulfate as a complexing agent were continuously added into the reaction tank under stirring, and nitrogen gas was continuously flowed thereinto. The flow rate of the aqueous solution of aluminum sulfate was adjusted such that the atomic ratio between nickel atoms, cobalt atoms, and aluminum atoms became 0.75:0.20:0.05. An aqueous solution of sodium hydroxide was appropriately added dropwise so that the pH of the solution in the reaction tank (when measured at 40°C) became 11.0, whereby nickel cobalt aluminum composite hydroxide particles were obtained. The obtained nickel cobalt aluminum composite hydroxide particles were washed with a sodium hydroxide solution and water, thereafter dehydrated by a centrifuge, isolated, and dried at 105°C, whereby a nickel cobalt aluminum composite hydroxide 2 was obtained.

[Mixing Step]

The obtained nickel cobalt aluminum composite hydroxide 2 obtained as described above and lithium hydroxide powder were weighed to achieve Li/(Ni + Co + Al) = 1.10 (molar ratio) and mixed.

[Calcining Step]

Thereafter, the mixture obtained in the mixing step was calcined in an oxygen atmosphere at 780°C for 6 hours to obtain a calcined product 2.

[Washing Step]

Thereafter, the obtained calcined product 2 was washed with water. In the washing step, 4000 g of the calcined product 2 was collected, and added to 9333 g of stirred pure water at a rate of 214 g/min per 1 L of the washing solution to produce a slurry. The obtained slurry was stirred for 10 minutes and dehydrated by filtration.

[Drying Step]

Thereafter, a wet cake obtained in the above washing step was dried at 150°C for 8 hours to obtain a lithium composite metal compound washed and dried powder 3 (hereinafter, referred to as lithium composite metal compound 3).

Evaluation of Lithium Composite Metal Compound 3

Compositional analysis of the obtained lithium composite metal compound 3 was performed, and when the composition was made to correspond to Composition Formula (I), x = -0.01, y = 0.20, and z = 0.05 were obtained.
The $L_a/L_b$, cycle retention ratio (%), BET specific surface area (unit: $m^2/g$), and amount of lithium hydroxide (unit: mass%) of the lithium composite metal compound 3 are described in Table 1.

(Example 4)

Manufacturing of Lithium Composite Metal Compound 4

[Step of Manufacturing Nickel Cobalt Aluminum Composite Hydroxide]

After water was put in a reaction tank equipped with a stirrer and an overflow pipe, an aqueous solution of sodium hydroxide was added thereto, and the liquid was maintained at a temperature of 45°C.
An aqueous solution of nickel sulfate and an aqueous solution of cobalt sulfate were mixed so that the atomic ratio between nickel atoms and cobalt atoms became 0.88:0.09, whereby a mixed raw material solution was prepared.
Next, the mixed raw material solution, 4.4 mass% of an aqueous solution of aluminum sulfate, and an aqueous solution of ammonium sulfate as a complexing agent were continuously added into the reaction tank under stirring, and nitrogen gas was continuously flowed thereinto. The flow rate of the aqueous solution of aluminum sulfate was adjusted such that the atomic ratio between nickel atoms, cobalt atoms, and aluminum atoms became 0.88:0.09:0.03. An aqueous solution of sodium hydroxide was appropriately added dropwise so that the pH of the solution in the reaction tank (when measured at 40°C) became 12.1, whereby nickel cobalt aluminum composite hydroxide particles were obtained. The obtained nickel cobalt aluminum composite hydroxide particles were washed with a sodium hydroxide solution and water, thereafter dehydrated by a centrifuge, isolated, and dried at 350°C, whereby a nickel cobalt aluminum composite hydroxide 3 was obtained.

[Oxidizing Step]

The obtained nickel cobalt aluminum composite hydroxide 3 was calcined at 670°C for 3 hours to obtain a nickel cobalt aluminum composite oxide 2.

[Mixing Step]

The obtained nickel cobalt aluminum composite oxide 2 obtained as described above and lithium hydroxide powder were weighed to achieve Li/(Ni + Co + Al) = 1.10 (molar ratio) and mixed.

[Calcining Step]

Thereafter, the mixture obtained in the mixing step was calcined in an oxygen atmosphere at 720°C for 10 hours to obtain a calcined product 3.

[Washing Step]

Thereafter, the obtained calcined product 3 was washed with water. In the washing step, 4000 g of the calcined product 3 was collected, and added to 9333 g of stirred pure water at a rate of 214 g/min per 1 L of the washing solution to produce a slurry. The obtained slurry was stirred for 20 minutes and dehydrated by filtration.

[Drying Step]

Thereafter, a wet cake obtained in the above washing step was dried at 150°C for 8 hours to obtain a lithium composite metal compound washed and dried powder 4 (hereinafter, referred to as lithium composite metal compound 4).

EP 3 706 214 A1

Evaluation of Lithium Composite Metal Compound 4

Compositional analysis of the obtained lithium composite metal compound 4 was performed, and when the composition was made to correspond to Composition Formula (I), x = 0.03, y = 0.09, and z = 0.03 were obtained.

The $L_a/L_b$, cycle retention ratio (%), BET specific surface area (unit: $m^2/g$), and amount of lithium hydroxide (unit: mass%) of the lithium composite metal compound 4 are described in Table 1.

(Comparative Example 1)

Production of Lithium Composite Metal Compound 5

[Mixing Step]

The nickel cobalt aluminum composite oxide 1 and lithium hydroxide powder were weighed to achieve Li/(Ni + Co + Al) = 1.10 (molar ratio) and mixed.

[Calcining Step]

Thereafter, the mixture obtained in the mixing step was calcined in an oxygen atmosphere at 780°C for 6 hours to obtain a calcined product 4.

[Washing Step]

Thereafter, the obtained calcined product 4 was washed with water. In the washing step, 4000 g of the calcined product 4 was collected, and added to 9333 g of stirred pure water at a rate of 214 g/min per 1 L of the washing solution to produce a slurry. The obtained slurry was stirred for 10 minutes and dehydrated by filtration.

[Drying Step]

Thereafter, a wet cake obtained in the above washing step was dried at 105°C for 12 hours to obtain a lithium composite metal compound washed and dried powder 5.

[Re-calcining Step]

Thereafter, the lithium composite metal compound washed and dried powder 5 was re-calcined in an oxygen atmosphere at 780°C for 5 hours to obtain a lithium composite metal compound re-calcined powder 5 (hereinafter, referred to as lithium composite metal compound 5).

Evaluation of Lithium Composite Metal Compound 5

Compositional analysis of the obtained lithium composite metal compound 5 was performed, and when the composition was made to correspond to Composition Formula (I), x = 0.0, y = 0.15, and z = 0.05 were obtained.

The $L_a/L_b$, cycle retention ratio (%), BET specific surface area (unit: $m^2/g$), and amount of lithium hydroxide (unit: mass%) of the lithium composite metal compound 5 are described in Table 1.

(Comparative Example 2)

Manufacturing of Lithium Composite Metal Compound 6

[Washing Step]

As described above, the obtained calcined product 2 was washed with water. In the washing step, 4000 g of the calcined product 2 was collected, and added to 9333 g of stirred pure water at a rate of 214 g/min per 1 L of the washing solution to produce a slurry. The obtained slurry was stirred for 20 minutes and dehydrated by filtration.

[Drying Step]

Thereafter, a wet cake obtained in the above washing step was dried at 105°C for 12 hours.

18

[Re-calcining Step]

Thereafter, the wet cake was re-calcined in an oxygen atmosphere at 780°C for 5 hours to obtain a lithium composite metal compound re-calcined powder 6 (hereinafter, referred to as lithium composite metal compound 6).

Evaluation of Lithium Composite Metal Compound 6

Compositional analysis of the obtained lithium composite metal compound 6 was performed, and when the composition was made to correspond to Composition Formula (I), x = 0.0, y = 0.20, and z = 0.05 were obtained.

The $L_a/L_b$, cycle retention ratio (%), BET specific surface area (unit: m²/g), and amount of lithium hydroxide of the lithium composite metal compound 6 are described in Table 1.

(Comparative Example 3)

Manufacturing of Lithium Composite Metal Compound 7

[Mixing Step]

The nickel cobalt aluminum composite oxide 2 and lithium hydroxide powder were weighed to achieve Li/(Ni + Co + Al) = 1.05 (molar ratio) and mixed.

[Calcining Step]

Thereafter, the mixture obtained in the mixing step was calcined in an oxygen atmosphere at 700°C for 10 hours to obtain a calcined product 5.

[Washing Step]

Thereafter, the obtained calcined product 5 was washed with water. In the washing step, 4000 g of the calcined product 5 was collected, and added to 9333 g of stirred pure water at a rate of 214 g/min per 1 L of the washing solution to produce a slurry. The obtained slurry was stirred for 20 minutes and dehydrated by filtration.

[Drying Step]

Thereafter, a wet cake obtained in the above washing step was dried at 150°C for 8 hours to obtain a lithium composite metal compound washed and dried powder 7.

[Re-calcining Step]

Thereafter, the lithium composite metal compound washed and dried powder 7 was re-calcined in an oxygen atmosphere at 760°C for 10 hours to obtain a lithium composite metal compound re-calcined powder 7 (hereinafter, referred to as lithium composite metal compound 7).

Evaluation of Lithium Composite Metal Compound 7

Compositional analysis of the obtained lithium composite metal compound 7 was performed, and when the composition was made to correspond to Composition Formula (I), x = 0.05 y = 0.09, and z = 0.03 were obtained.

The $L_a/L_b$, cycle retention ratio (%), BET specific surface area (unit: m²/g), and amount of lithium hydroxide (unit: mass%) of the lithium composite metal compound 7 are described in Table 1.

[Table 1]

| | Specification | Composition | $L_a$ (Å) | $L_b$ (Å) | $L_a/L_b$ | Cycle retention ratio (%) | BET specific surface area (m²/g) | Amount of sodium hydroxide (mass%) |
|---|---|---|---|---|---|---|---|---|
| Example 1 | Washed and dried product | Ni:Co:Al=80: 15:5 | 756 | 758 | 1.00 | 90.7 | 0.8 | 0.29 |

(continued)

|  | Specification | Composition | $L_a$ (Å) | $L_b$ (Å) | $L_a/L_b$ | Cycle retention ratio (%) | BET specific surface area ($m^2/g$) | Amount of sodium hydroxide (mass%) |
|---|---|---|---|---|---|---|---|---|
| Example 2 | Washed and dried product | Ni:Co:Al=80:15:5 | 829 | 661 | 1.25 | 85.8 | 1.1 | 0.07 |
| Example 3 | Washed and dried product | Ni:Co:Al=75:20:5 | 773 | 724 | 1.07 | 86.2 | 1.3 | 0.07 |
| Example 4 | Washed and dried product | Ni:Co:Al=88:9:3 | 716 | 690 | 1.04 | 86.8 | 1.2 | 0.11 |
| Comparative Example 1 | Re-calcined product | Ni:Co:Al=80:15:5 | 686 | 479 | 1.43 | 80.5 | 0.3 | 0.25 |
| Comparative Example 2 | Re-calcined product | Ni:Co:Al=75:20:5 | 705 | 514 | 1.37 | 81.8 | 0.2 | 0.20 |
| Comparative Example 3 | Re-calcined product | Ni:Co:Al=88:9:3 | 708 | 523 | 1.35 | 80.7 | 0.4 | 0.37 |

As shown in Table 1 above, all of the lithium composite metal compounds of Examples 1 to 4 had a cycle retention ratio of as high as 85% or more at a high voltage. Contrary to this, Comparative Examples 1 and 2 that were considered to have an $L_a/L_b$ of more than 1.3 and thus have a highly anisotropic crystal structure, had a low cycle retention ratio at a high voltage.

(Example 5)

Production of Lithium Composite Metal Compound 8

[Mixing Step]

The nickel cobalt aluminum composite hydroxide 2 and lithium hydroxide powder were weighed to achieve Li/(Ni + Co + Al) = 1.07 (molar ratio) and mixed.

[Calcining Step]

Thereafter, the mixture obtained in the above mixing step was calcined in an oxygen atmosphere at 780°C for 6 hours to obtain a lithium composite metal compound main calcined powder 8 (hereinafter, referred to as lithium composite metal compound 8).

Evaluation of Lithium Composite Metal Compound 8

Compositional analysis of the obtained lithium composite metal compound 8 was performed, and when the composition was made to correspond to Composition Formula (I), x = 0.07, y = 0.20, and z = 0.05 were obtained.
The $L_a$, $L_b$, and $L_a/L_b$ of the lithium composite metal compound 8 are described in Table 2.

(Example 6)

Manufacturing of Lithium Composite Metal Compound 9

[Washing Step]

The lithium composite metal compound 8 was washed with water. In the washing step, 6970 g of the lithium composite metal compound 8 was collected, and added to 16,263 g of stirred pure water at an addition rate of 171 g/min per 1 L of the washing solution to produce a slurry. The obtained slurry was stirred for 10 minutes and dehydrated by filtration.

[Drying Step]

Thereafter, a wet cake obtained in the above washing step was dried at 105°C for 12 hours to obtain a lithium composite metal compound washed and dried powder 9 (hereinafter, referred to as lithium composite metal compound 9).

Evaluation of Lithium Composite Metal Compound 9

Compositional analysis of the obtained lithium composite metal compound 9 was performed, and when the composition was made to correspond to Composition Formula (I), x = -0.01, y = 0.20, and z = 0.05 were obtained.
The $L_a$, $L_b$, and $L_a/L_b$ of the lithium composite metal compound 9 are described in Table 2.

(Comparative Example 4)

Manufacturing of Lithium Composite Metal Compound 10

[Re-calcining Step]

The lithium composite metal compound 9 was re-calcined in an oxygen atmosphere at 780°C for 5 hours to obtain a lithium composite metal compound re-calcined powder 10 (hereinafter, referred to as lithium composite metal compound 10).

Evaluation of Lithium Composite Metal Compound 10

Compositional analysis of the obtained lithium composite metal compound 10 was performed, and when the composition was made to correspond to Composition Formula (I), x = -0.01, y = 0.20, and z = 0.05 were obtained.

[Table 2]

|  | Specification | $L_a$ (Å) | $L_b$ (Å) | $L_a/L_b$ |
|---|---|---|---|---|
| Example 5 | Main calcined product | 741 | 634 | 1.17 |
| Example 6 | Washed and dried product | 770 | 738 | 1.04 |
| Comparative Example 4 | Re-calcined product | 719 | 506 | 1.42 |

As shown in the results in Table 2 above, in Example 6 in which the main calcining was performed and thereafter the washing and drying steps were performed, $L_a/L_b$ was smaller and a crystal structure having higher isotropy could be formed compared to Example 5 in which the washing and drying steps were not performed.
In addition, it could be seen that in Comparative Example 4 in which re-calcining was further performed after washing and drying, $L_a/L_b$ was large and a crystal structure having high anisotropy was formed.

[Industrial Applicability]

According to the present invention, it is possible to provide a lithium composite metal compound having a high cycle retention ratio, a positive electrode active material for lithium secondary batteries using the lithium composite metal compound, a positive electrode for lithium secondary batteries, and a lithium secondary battery.

[Reference Signs List]

1    Separator
2    Positive electrode
3    Negative electrode
4    Electrode group
5    Battery can
6    Electrolytic solution
7    Top insulator

8      Sealing body
10     Lithium secondary battery
21     Positive electrode lead
31     Negative electrode lead

**Claims**

1.  A lithium composite metal compound represented by Composition Formula (I),
    wherein, in a powder X-ray diffraction measurement using CuKa radiation, when a crystallite diameter calculated from a diffraction peak in a range of $2\theta = 18.7 \pm 1°$ is defined as $L_a$ and a crystallite diameter calculated from a diffraction peak in a range of $2\theta = 64.5 \pm 1°$ is defined as $L_b$, a ratio ($L_a/L_b$) of $L_a$ to $L_b$ is $L_a/L_b \leq 1.3$,

    $$Li[Li_x(Ni_{(1-y-z)}Co_yM_z)_{1-x}]O_2 \qquad (I)$$

    in Formula (I), M is one or more metal elements selected from the group consisting of Mn, Fe, Cu, Ti, Mg, Al, W, B, Mo, Zn, Sn, Zr, Ga, Nb, and V, and $-0.1 \leq x \leq 0.2$, $0 < y \leq 0.3$, and $0 \leq z \leq 0.2$ are satisfied.

2.  The lithium composite metal compound according to claim 1,
    wherein $L_b$ satisfies $600\ Å \leq L_b \leq 800\ Å$.

3.  The lithium composite metal compound according to claim 1 or 2,
    wherein a BET specific surface area is more than $0.4\ m^2/g$ and $3.0\ m^2/g$ or less.

4.  The lithium composite metal compound according to any one of claims 1 to 3,
    wherein an amount of lithium hydroxide obtained by subjecting the lithium composite metal compound to neutralization titration is 0.3 mass% or less with respect to a total mass of the lithium composite metal compound.

5.  The lithium composite metal compound according to any one of claims 1 to 4,
    wherein $0 < x \leq 0.2$ is satisfied in Composition Formula (I).

6.  A positive electrode active material for a lithium secondary battery, comprising:
    the lithium composite metal compound according to any one of claims 1 to 5.

7.  A positive electrode for a lithium secondary battery, comprising:
    the positive electrode active material for a lithium secondary battery according to claim 6.

8.  A lithium secondary battery, comprising:
    the positive electrode for a lithium secondary battery according to claim 7.

FIG. 1A

FIG. 1B

## INTERNATIONAL SEARCH REPORT

| | International application No. |
|---|---|
| | PCT/JP2018/040152 |

**A. CLASSIFICATION OF SUBJECT MATTER**
Int. Cl. H01M4/525(2010.01)i, C01G53/00(2006.01)i, H01M4/505(2010.01)i

According to International Patent Classification (IPC) or to both national classification and IPC

**B. FIELDS SEARCHED**

Minimum documentation searched (classification system followed by classification symbols)
Int. Cl. H01M4/525, C01G53/00, H01M4/505

Documentation searched other than minimum documentation to the extent that such documents are included in the fields searched
Published examined utility model applications of Japan    1922-1996
Published unexamined utility model applications of Japan   1971-2018
Registered utility model specifications of Japan    1996-2018
Published registered utility model applications of Japan   1994-2018

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2017-525089 A (UMICORE) 31 August 2017, claims, paragraphs [0017], [0027], examples & US 2017/0125808 A1, paragraphs [0017], [0035], claims, examples & WO 2015/189740 A1 & TW 201607120 A & CN 106463724 A & KR 10-2017-0018405 A | 1-8 |
| A | 粉末X線解析の実際 第2版, 第2版第5刷, 株式会社 朝倉書店, 10 September 2012, pp. 81-82, non-official translation (The Realities of Powder X-Ray Analysis, 2nd Edition, 5th Printing. Asakura Publishing Co., Ltd.) | 1-8 |
| A | JP 2005-53764 A (NIKKO MATERIALS CO., LTD.) 03 March 2005, claims (Family: none) | 1-8 |

☐ Further documents are listed in the continuation of Box C.    ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 22.11.2018 | 04.12.2018 |

| Name and mailing address of the ISA/<br>    Japan Patent Office<br>    3-4-3, Kasumigaseki, Chiyoda-ku,<br>    Tokyo 100-8915, Japan | Authorized officer |
|---|---|
| | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017209541 A
- WO 2014136760 A
- JP 2002201028 A

**Non-patent literature cited in the description**

- **YOSHIO WASEDA.** X-ray structure analysis-determine arrangement of atoms. Matsubara Eiichiro, 30 April 2002